# EUROPÄISCHE PATENTSCHRIFT

(11) **EP 4 124 218 B1**
(45) Veröffentlichungstag und Bekanntmachung des Hinweises auf die Patenterteilung: **13.11.2024**
(21) Anmeldenummer: 22187726.9
(22) Anmeldetag: 29.07.2022
(51) Int. Cl.: A01B 23/06, A01B 15/16

(54) **ARBEITSELEMENT ZUR BODENBEARBEITUNG**
WORKING ELEMENT FOR WORKING THE SOIL
ÉLÉMENT DE TRAVAIL DESTINÉ AU TRAITEMENT DU SOL

(30) Priorität: 30.07.2021 DE 102021119841
(43) Veröffentlichungstag der Anmeldung: 01.02.2023
(73) Patentinhaber: Treffler Maschinenbau GmbH & Co. KG, 86554 Pöttmes-Echsheim (DE)
(72) Erfinder: TREFFLER, Paul, 86554 Pöttmes-Echsheim (DE)
(74) Vertreter: TBK

(56) Entgegenhaltungen:
- CA-A1- 2 969 875
- DE-A1- 102016 119 700
- US-A- 5 875 855
- US-B2- 10 039 223
- US-B2- 9 392 737

## Beschreibung

### Technisches Gebiet der Erfindung

Die vorliegende Erfindung betrifft ein Arbeitselement für ein Bodenbearbeitungsgerät zur Bodenbearbeitung.

### Stand der Technik

In dem Stand der Technik ist ein Arbeitselement ein Teil eines landwirtschaftlichen Geräts zur Bodenbearbeitung, welches unter anderem für eine mechanische Unkrautbekämpfung aber auch für eine gezielte Erdanhäufung zur Erzeugung von Dämmen für soggenannte Dammkulturen verwendet wird. Das Arbeitselement wird mittels einem Bodenbearbeitungsgerät an einer Zugmaschine angebracht und in Bodenbearbeitungsrichtung über den zu bearbeitenden Boden gezogen.

FIG. 7 der DE 10 2016 119 700 A1 zeigt ein Arbeitselement gemäß dem Oberbegriff des Anspruchs 1. US 9 392 737 B2, US 10 039 223 B2, US 5 875 855 A und CA 2 969 875 A1 zeigen weitere gewöhnliche Arbeitselemente.

### Zusammenfassung der Erfindung

Der Erfindung liegt die Aufgabe zugrunde, ein Arbeitselement bereitzustellen, das mittels günstiger Gestaltung eine verbesserte Bodenbearbeitung ermöglicht.

Die vorliegende Erfindung löst die Aufgabe durch ein Arbeitselement gemäß Patentanspruch 1. Vorteilhafte Weiterbildungen sind Gegenstand der Unteransprüche.

Ein erfindungsgemäßes Arbeitselement für ein Bodenbearbeitungsgerät weist ein Zentralelement, das in einem mittleren Bereich des Arbeitselements angeordnet ist, und ein Rotationsbauteil auf, das mittels dem Zentralelement um eine Drehachse in eine Drehrichtung drehbar ist und sich von dem Zentralelement in einer Radialrichtung erstreckt, die einen stumpfen Winkel mit der Drehachse einschließt. Dabei weist das das Rotationsbauteil Segmente auf, die sich in der Radialrichtung bis zu dem Ende des Rotationsbauteils erstrecken, die an einem Ende in der Radialrichtung entfernt von dem Zentralelement eine Schneide aufweisen, die an einer in Drehrichtung vorderen Seite eine Eintauchkante aufweisen und die einen in Drehrichtung umlaufenden und in Richtung der Drehachse vorstehenden Vorsprung aufweisen. Dabei ist das Arbeitselement so gestaltet, dass die Segmente relativ zueinander in Richtung der Drehachse beweglich sind.

Ein Segment kann sich an unterschiedlichen Stellen in der Drehrichtung unterschiedlich weit in der Radialrichtung erstrecken. Betrachtet in Richtung der Drehachse kann das Arbeitselement insgesamt somit beispielsweise eine wellenförmige Außenkontur aufweisen. Dies begünstigt die Erdreichbewegung.

Das Arbeitselement taucht bei der Bodenbearbeitung mit der Eintauchkante in den zu bearbeitenden Boden ein. Durch Drehung des Arbeitselements um die Drehachse in die Drehrichtung wird die Schneide eines Segments in Radialrichtung in den Boden gedrückt. Dabei wird das Arbeitselement in einer Bodenbearbeitungsrichtung durch den zu bearbeitenden Boden bewegt, so dass das Arbeitselement eine Rollbewegung ausführt.

Die Schneide ist ein in Radialrichtung flach zulaufender Bereich. Die Schneide kann beispielsweise auch ähnlich einer Messerschneide geschärft sein. Die Schneide dient dazu, Unkraut und deren Wurzeln zu zerschneiden und erleichtert ein Eindrücken eines Segments in den Boden. Somit ist die Bodenbearbeitung energieeffizient möglich und ein Verschleiß der Enden in Radialrichtung der Segmente wird reduziert.

Die Eintauchkante kann in Drehrichtung flach zulaufend sein. Dies erleichtert ein Eintauchen der Eintauchkante in den zu bearbeitenden Boden.

Die Eintauchkante kann in Drehrichtung gebogen sein. Beispielsweise kann die Eintauchkante sichelförmig sein. Dabei kann die Biegung so ausgeführt sein, dass der gebogene Abschnitt zuerst in den zu bearbeitenden Boden eintaucht. Je näher die Biegung an dem Ende eines Segments in Radialrichtung angeordnet ist, desto mehr unterstützt die Biegung, dass das Arbeitselement eine Rollbewegung ausführt, wenn es durch den zu bearbeitenden Boden geführt wird. Dadurch wird der Energieaufwand für die Bearbeitung des Bodens reduziert und eine energieeffiziente Bodenbearbeitung ermöglicht.

Außerdem kann die Eintauchkante in dem Bereich ihres Endes in Radialrichtung relativ zu einer Drehebene, die senkrecht zu der Drehachse ist, in Richtung der Drehachse gebogen sein. Dadurch wird die Erdreichbewegung unterstützt.

Der Vorsprung der Segmente dient dazu, Erdreich entgegen einer Schwerkraftrichtung bis über die Oberfläche des zu bearbeitenden Bodens zu befördern und eine Erdanhäufung zu erzeugen. Die Erdanhäufung kann dazu dienen, in Bodenbearbeitungsrichtung Dämme zu errichten, die zur Bepflanzung mit Dammkulturen verwendet werden können. Die Erdanhäufung kann auch dazu dienen, Unkraut, das sich in dem bewegten Erdreich befindet zu entwurzeln, oder das Unkraut mit Erdreich zu bedecken. Durch das Bedecken des Unkrauts mit Erdreich, wird dem Unkraut Sonnenlicht und Sauerstoff bzw. Kohlendioxyd genommen. Somit wird das Wachstum des Unkrauts verhindert und das Unkraut stirbt ab.

Der Vorsprung kann sich beispielsweise in der Radialrichtung in einem mittleren Bereich eines Segments befinden. Der Vorsprung kann sich auch an einem Ende eines Segments in der Radialrichtung befinden. Es können auch mehrere Vorsprünge an einem Segment vorgesehen sein, die sich an unterschiedlichen Stellen in der Radialrichtung befinden.

Durch die Anordnung eines Vorsprungs in Radialrichtung kann bestimmt werden, wie stark die Erdreichbewegung durch die Vorsprünge ausfällt. Ist ein Vorsprung in Radialrichtung nahe an dem Ende eines Segments vorgesehen, führt dieser Vorsprung eine starke Erdreichbewegung durch. Ist ein Vorsprung in Radialrichtung nahe dem Zentralelement vorgesehen, führt dieser Vorsprung eine geringe Erdreichbewegung durch.

Dadurch, dass die Segmente relativ zueinander in Richtung der Drehachse beweglich sind, können Erdklumpen, die sich an dem Arbeitselement angelagert haben, segmentweise abgestreift werden. Außerdem beschränkt die Beweglichkeit der Segmente relativ zueinander die Größe der sich an dem Arbeitselement anlagernden Erdklumpen. Dadurch wird ein erneutes Eintauchen eines Segments in den zu bearbeitenden Boden erleichtert und die Effizienz der Arbeitselemente wird verbessert. Außerdem wird verhindert, dass Erdklumpen, die sich oberhalb des zu bearbeitenden Bodens von dem Arbeitselement lösen, durch die Luft geschleudert werden und an unerwünschten Stellen, wie beispielsweise einer Dammkultur oder sonstigen Nutzpflanze landen oder zu groß werden. Somit wird die Gefahr verringert, dass bereits angepflanzte Nutzpflanzen durch die Bodenbearbeitung beschädigt werden. Dadurch ist eine wirksame Bodenbearbeitung möglich.

Die Bewegung der Segmente relativ zueinander ist vorzugsweise eine Schwenkbewegung, die im Bereich des Zentralelements gering ist und an den Enden in Radialrichtung groß ist. Vorzugsweise werden die Segmente geschwenkt, wenn sie in dem zu bearbeitenden Boden eingetaucht sind. Die Auslenkung der Segmente vergrößert sich von dem Eintauchen der Segmente bis zum Auftauchen der Segmente. Wenn die Segmente wieder aus dem zu bearbeitenden Boden auftauchen, schwenken die Segmente vorzugsweise wieder zurück in ihre Ausgangslage bzgl. der Drehachse.

Dadurch, dass sich die Segmente in Radialrichtung bis zu dem Ende des Rotationsbauteils erstrecken, entsprechen insbesondere die Enden in Radialrichtung des Rotationsbauteils den Enden in Radialrichtung der Segmente.

Dadurch sind insbesondere Enden in Radialrichtung der Segmente mit den Schneiden relativ zueinander in Richtung der Drehachse beweglich.

Mittels dem Zentralelement ist das Rotationsbauteil drehbar in zumindest eine Drehrichtung.

Das Zentralelement kann mittels eines Freilaufmechanismus eine Drehrichtung sperren. Dies gewährleistet, dass das Arbeitselement ausschließlich in seiner Arbeitsdrehrichtung betrieben wird.

Das Zentralelement kann einen Lagerungsabschnitt aufweisen, der beispielsweise so ausgebildet ist, dass er eine zylindrische Achse so gleitbar aufnimmt, dass das Rotationsbauteil drehbar ist. Ferner kann das Zentralelement zumindest einen Anlageabschnitt aufweisen, mit dem seine Bewegung in Richtung der Drehachse beschränkt werden kann. Alternativ kann der Lagerungsabschnitt des Zentralelements auch so ausgebildet sein, dass er ein Lager, wie ein Radiallager, Schrägkugellager, Kegelrollenlager oder Dergleichen aufnehmen kann.

Das Rotationsbauteil kann rotationssymmetrisch gestaltet sein. Dies vereinfacht den Herstellungsprozess und das Arbeitselement kann kostengünstig hergestellt werden.

Das Rotationsbauteil kann sich bezüglich der Richtung der Drehachse senkrecht erstrecken. Das Rotationsbauteil kann aber auch einen stumpfen Winkel mit der Richtung der Drehachse einschließen. Durch die Ausbildung eines stumpfen Winkels des Rotationsbauteils, kann das Rotationsbauteil die Erdreichbewegung der Vorsprünge unterstützen. Dadurch wird die Wirksamkeit der Bodenbearbeitung verbessert.

Ferner ist ein Vorsprung des erfindungsgemäßen Arbeitselements an einem Ende in Radialrichtung der Segmente und entfernt von dem Zentralelement angeordnet.

An dem Ende der Segmente in Radialrichtung ist bei einer Drehung der Segmente um die Drehachse der Bewegungsumfang und auch die Bewegungsgeschwindigkeit am größten. Dieser Bereich des Arbeitselements taucht am tiefsten in den zu bearbeitenden Boden ein. Durch Anordnung des Vorsprungs in diesem Bereich ist die daraus resultierende Erdreichbewegung am größten. Somit kann ein Arbeitselement mit möglichst geringem Durchmesser in der Drehebene und möglichst großer Wirksamkeit bezüglich der Erdreichbewegung bereitgestellt werden.

Dabei kann der Vorsprung so ausgestaltet sein, dass er sich in Radialrichtung vorzugsweise nicht weiter als über die letzten 10% des Segmentes vor dem Ende des Segments erstreckt. Dabei kann die Erstreckung des Vorsprungs in Richtung der Drehachse vorzugsweise geringer als 10% des Außendurchmessers des Arbeitselements in der Drehebene sein. Eine solche Konfiguration nutzt die Vorteile einer großen Erdreichbewegung und gleichzeitig eines geringen Arbeitswiderstandes vorteilhaft aus.

Ferner kann ein Vorsprung des erfindungsgemäßen Arbeitselements mittels einem Knick gebildet sein, von dem aus sich das Rotationsbauteil zusätzlich zu der Radialrichtung in Richtung der Drehachse erstreckt.

Damit kann das Segment und der Vorsprung einstückig ausgeführt werden, wobei der Vorsprung mittels Umformen, beispielsweise Biegen, eines Bereiches des Segmentes hergestellt werden kann, das in seinem Ursprungszustand eine Plattenform aufweist. Dies ermöglicht eine kostengünstige Herstellung des Arbeitselements.

Somit können sich die Vorsprünge mittels einer Knickkante von dem verbleibenden Segment abzeichnen. Betrachtet in Richtung der Drehachse weißt die Knickkante eine Bogenform mit einem bestimmten Biegeradius auf. In diesem Fall kann der Vorsprung als eine Wölbung bezeichnet werden.

Die Wölbung kann in Drehrichtung umlaufend sein.

Vorsprünge können separate Bauteile sein, z.B. Bolzen oder Platten, aber auch gebogene Platten oder Schaufeln sein, die in Radialrichtung ausgerichtet sind, und mit dem Segment verbunden sind. Dadurch lassen sich bei Beschädigung einzelner Vorsprünge diese austauschen und eine lange Lebensdauer des gesamten Arbeitselements wird ermöglicht.

In diesem Fall kann die Position der Vorsprünge in Radialrichtung einstellbar sein, beispielsweise über Langlöcher, die in Radialrichtung ausgerichtet sind und über die die Vorsprünge mittels Schrauben mit den Segmenten verbunden werden können.

Ferner kann ein Segment eines erfindungsgemäßen Arbeitselements zumindest eine Aussparung haben.

Die Aussparung dient dazu, dass sich dort die Erdklumpen oder der Mulch ansammeln können, die an den Segmenten anhaften und beim Auftauchen der Segmente aus dem zu bearbeitenden Boden abgestreift werden. Allein durch die Schwerkraft fällt somit ein angesammelter Erdklumpen zu Boden, bzw. verlässt die Oberfläche des zu bearbeitenden Bodens erst gar nicht. Im Gegensatz dazu, ohne die Aussparung, würde ein angesammelter Erdklumpen bei der Bewegung eines Segments, das gerade aus dem zu bearbeitenden Boden auftaucht, zurück in seine Ausgangslage bzgl. der Drehachse, unkontrolliert weggeschleudert werden und könnte an unerwünschten Stellen, wie beispielsweise einer Dammkultur oder sonstigen Nutzpflanze landen. Somit reduzieren die Aussparungen die Gefahr einer Beschädigung einer Nutzpflanze während der Bodenbearbeitung.

Über eine Gestaltung mittels Schiene und Arretierung kann die Aussparung, bzw. ein in Drehrichtung über die Aussparung hinausragender Bereich in der Radialrichtung verschoben und arretiert werden. Damit kann die Aussparung auf eine gewünschte Position in Radialrichtung eingestellt werden.

Ferner kann eine Aussparung eines erfindungsgemäßen Arbeitselements in der Radialrichtung in einem mittleren Bereich des Segments und auf einer Außenseite des Segments gegenüber der Eintauchkante positioniert sein.

Vorzugsweise ist die Aussparung an der Kante eines Segments angeordnet, die der Eintrittskante in Drehrichtung gegenüberliegt. Vorzugsweise ist die Aussparung in der Radialrichtung mittig in einem Segment angeordnet.

Die Aussparung kann vorzugsweise so gestaltet sein, dass eine Breite des Segments in Drehrichtung nicht kleiner als halb so breit ist, wie eine Breite, die sich für das Segment ergibt, wenn anstatt der Aussparung die hintere Kante gegenüber der Eintauchkante gerade verlaufen würde. Dadurch ist eine ausreichende Festigkeit des durch die Aussparung geschwächten Bereichs gewährleistet.

Ferner kann die Aussparung so gestaltet sein, dass sie sich in der Radialrichtung nicht weiter als über die Hälfte der Länge des Segments erstreckt. Dadurch ist eine ausreichende Erdreichbewegung mittels der verbleibenden Fläche des Segments gewährleistet.

Ein Segment kann auch eine zusätzliche Aussparung an der Eintrittskante haben. Dabei kann die zusätzliche Aussparung in dem Segment der Aussparung in Drehrichtung gegenüberliegen.

Ferner können in einem erfindungsgemäßen Arbeitselement zwischen den Segmenten in Radialrichtung Schlitze vorgesehen sein.

Die Schlitze haben vorzugsweise eine Breite in der Drehrichtung von 1 mm bis 1,5 mm. Dadurch ist gewährleistet, dass sich die Segmente relativ zueinander in beide Richtungen bezogen auf die Drehachse bewegen können.

Die Bewegungsfreiheit der Segmente relativ zueinander kann durch Anschlagvorsprünge an zumindest einer der Eintauchkante oder der in Drehrichtung gegenüberliegenden Kante so eingeschränkt sein, dass sich ein Segment bezüglich seines in Drehrichtung nachfolgenden oder vorhergehenden Segments nur in eine Richtung in der Drehachse bewegen kann. Mit anderen Worten kann ein Segment ein nachfolgendes oder vorhergehendes Segment in der Drehrichtung mit zumindest einem Anschlagsvorsprung überlappen.

Die Segmente in einem erfindungsgemäßen Arbeitselement können aus vorgehärtetem Federstahl hergestellt sein.

Dies hat zur Folge, dass eine Auslenkung eines Segments lediglich unter Aufbringung einer Querkraft in Richtung der Drehachse möglich ist und dass sich die Segmente wieder zu ihrer ursprünglichen Lage bezüglich der Drehachse zurückbewegen, wenn die Querkraft weggenommen wird.

Wird die Querkraft unterhalb des zu bearbeitenden Bodens durch den Boden selbst aufgebracht, bewegt sich ein Segment automatisch wieder zurück in seine ursprüngliche Lage, wenn das Segment aus dem Boden auftaucht.

Diese Kraftaufbringung mittels dem zu bearbeitenden Boden kann beispielsweise erreicht werden, indem das Arbeitselement, das in den Boden eingetaucht ist, nicht in seiner Radialrichtung durch den Boden gezogen wird, sondern in einem Winkel dazu. Mit anderen Worten kann solch eine Querkraft erzeugt werden, wenn die Bodenbearbeitungsrichtung und die Radialrichtung der Arbeitselemente einen Winkel aufweisen.

Außerdem kann das Segment eine Beschichtung aufweisen, die die Lebensdauer des Arbeitselements erhöht.

Segmente eines erfindungsgemäßen Arbeitselements können im Wesentlichen plattenförmig in der Radialrichtung sein.

Somit kann das Rotationbauteil kostengünstig mittels Stanzen aus einem plattenförmigen Flachmaterial hergestellt sein. Dies ermöglicht eine kostengünstige Herstellung der Arbeitselemente.

Die Seitenflächen der Segmente in der Richtung der Drehachse können Welligkeiten aufweisen. Diese Welligkeiten unterstützen die Erdreichbewegung der Vorsprünge.

Die Seitenflächen der Segmente in der Richtung der Drehachse können Öffnungen aufweisen, die in Richtung der Drehachse durchgängig sind und sich innerhalb der Segmente befinden. Dadurch kann das Gewicht des Arbeitselements verringert werden. Ferner kann dadurch die Anlagerung von Erdklumpen an den Segmenten reduziert werden. Das ermöglicht eine wirksame Bodenbearbeitung.

Ein Zentralelement eines erfindungsgemäßen Arbeitselements kann ein separates Bauteil sein.

Dadurch können Zentralelement und Rotationsbauteil aus unterschiedlichen Materialien hergestellt sein, die speziell für die jeweilige Funktion geeignet sind.

Beispielsweise kann das Zentralelement aus Gusseisen hergestellt sein, wohingegen das Rotationsbauteil aus einem vorgehärteten Federstahl hergestellt ist. In dem Zentralelement kann mittels Gussrohteil und spanender Bearbeitung beispielsweise mittig im Zentralelement ein Lagersitz für ein Rollenlager kostengünstig hergestellt werden. Das Rotationsbauteil kann beispielsweise mittels Stanzen aus einem plattenförmigen Federstahlmaterial hergestellt werden. Somit ist das Arbeitselement kostengünstig herstellbar.

Ein Zentralelement eines erfindungsgemäßen Arbeitselements kann zumindest einen Aufnahmeabschnitt aufweisen, um das Rotationsbauteil an dem Zentralelement in Radialrichtung und Achsrichtung zu stützen.

Beispielsweise kann ein erster Aufnahmeabschnitt ein zylindrischer Vorsprung in Richtung der Drehachse sein, um das Rotationsbauteil in Radialrichtung zu stützen. Dementsprechend kann das Rotationsbauteil eine zylindrische Öffnung aufweisen, die sich ebenfalls in Richtung der Drehachse erstreckt, und die mit dem zylindrischen Vorsprung des Zentralelements in Kontakt bringbar ist.

Der erste Aufnahmeabschnitt kann mittig in dem Zentralelement vorgesehen sein.

Beispielsweise kann ein zweiter Aufnahmeabschnitt eine ebene Fläche sein, die sich in dem Zentralelement senkrecht oder in einem stumpfen Winkel zu der Drehachse erstreckt, um das Rotationsbauteil in Richtung der Drehachse zu stützen. Dementsprechend kann das Rotationsbauteil eine ebene Fläche aufweisen, die sich senkrecht oder in einem stumpfen Winkel zu der Drehachse erstreckt und mit der ebenen Fläche des Zentralelements in Kontakt bringbar ist.

Der zweite Aufnahmeabschnitt kann in Radialrichtung konzentrisch zu dem ersten Aufnahmeabschnitt angeordnet sein.

Ferner kann ein Arbeitselement Sicherungselemente, wie Schrauben, Bolzen oder Sicherungsringe aufweisen, um das Rotationsbauteil bezüglich dem Zentralelement in Richtung der Drehachse zu positionieren.

Mittels einer solchen Gestaltung kann das Rotationsbauteil leicht von dem Zentralelement gelöst werden. Ein Rotationsbauteil kann somit auf einfache Weise durch ein anderes Rotationsbauteil ausgetauscht werden. Dies führt zum Einen zu einer flexiblen Anwendbarkeit des Arbeitselements und zum Anderen zu einer erhöhten Lebensdauer des Arbeitselements.

Segmente eines erfindungsgemäßen Arbeitselements können separat voneinander ausgeführt sein und mittels einem Zentralelement gekoppelt sein.

Jedes Segment kann einzeln mittels einem Aufnahmeabschnitt in dem Zentralelement an das Zentralelement gekoppelt werden.

Beispielsweise kann das Zentralelement für jedes Segment als ersten Aufnahmeabschnitt einen zylindrischen Vorsprung in Richtung der Drehachse aufweisen, um das Rotationsbauteil in Radialrichtung zu stützen. Dementsprechend kann das Rotationsbauteil eine zylindrische Öffnung aufweisen, die sich ebenfalls in Richtung der Drehachse erstreckt, und die mit dem zylindrischen Vorsprung des Zentralelements in Kontakt bringbar ist.

Beispielsweise kann das Zentralelement für jedes Segment als ersten Aufnahmeabschnitt einen Durchgang haben. In den Durchgang können vorstehende Bereiche des Segments oder Sicherungselemente, wie Schrauben, eingeführt werden.

Beispielsweise kann das Zentralelement für jedes Segment als zweiten Aufnahmeabschnitt eine ebene Fläche aufweisen.

Ferner kann ein Segment mittels Sicherungselementen, wie Schrauben, Bolzen oder Sicherungsringe in Richtung der Drehachse bezüglich dem Zentralelement positioniert werden.

Das hat den Vorteil, dass einzelne Segmente leicht durch andere Segmente ausgetauscht werden können. Dies führt zum einen zu einer flexiblen Anwendbarkeit des Arbeitselements und zum anderen zu einer erhöhten Lebensdauer des Arbeitselements.

Ein Segment kann auch mittels mehrerer erster Aufnahmeabschnitte an das Zentralelement gekoppelt werden. Somit kann eine Verdrehung der Segmente relativ zu dem Zentralelement in Drehrichtung eingeschränkt werden.

Ferner können mehrere Segmente eine Einheit bilden und einstückig miteinander ausgebildet sein. Das reduziert die notwendige Anzahl an Aufnahmeabschnitten in dem Zentralelement und reduziert die Kosten für die Herstellung des Arbeitselements.

Segmente eines erfindungsgemäßen Arbeitselements können mittels zumindest einem Federelement geführt werden, das auf die Segmente an zumindest einer Führungsfläche eine Federkraft zum Großteil in Achsrichtung aufbringt.

Die Führungsfläche ist die Fläche, an der ein Federelement ein Segment berührt.

Dies hat zur Folge, dass eine Auslenkung eines Segments lediglich unter Aufbringung einer Querkraft in Richtung der Drehachse möglich ist und dass sich die Segmente wieder zu ihrer ursprünglichen Lage bezüglich dem Zentralelement zurückbewegen, wenn die Querkraft weggenommen wird.

Wird die Querkraft unterhalb des zu bearbeitenden Bodens durch den Boden selbst aufgebracht, bewegt sich ein Segment automatisch wieder zurück in seine ursprüngliche Lage bezüglich dem Zentralelement, wenn das Segment aus dem Boden auftaucht.

Dadurch, dass die Segmente relativ zueinander in Richtung der Drehachse beweglich sind, können Erdklumpen, die sich an dem Arbeitselement angelagert haben, segmentweise abgestreift werden.

Ein Federelement kann beispielsweise eine Tellerfeder, eine Blattfeder, eine Spiraldruckfeder oder eine Zugfeder sein, die von einer Seite in Richtung der Drehachse eine Kraft auf die Segmente ausübt.

Es können auch zwei Federelemente vorgesehen sein, die jeweils von gegenüberliegenden Seiten in Richtung der Drehachse Kräfte auf die Segmente ausüben, die einander entgegengesetzt wirken.

Der Vorteil einer Tellerfeder oder Blattfeder, die auf alle Segmente wirkt, ist, dass eine Auslenkung in Richtung der Drehachse einzelner Segmente von der Auslenkung eines in Drehrichtung vorherigen oder nachfolgenden Segments abhängt. Dies bewirkt ein sanftes Zurückführen eines Segments in seine ursprüngliche Lage bezüglich dem Zentralelement.

Wenn ein Federelement in dem Arbeitselement verwendet wird, kann eine Funktionstrennung durchgeführt werden. Dann können Segmente und Federelement aus unterschiedlichen Materialien hergestellt sein, die speziell für die jeweilige Funktion geeignet sind. Beispielsweise kann das Federelement aus einem Federstahl hergestellt sein und die Relativbewegung der Segmente zueinander ermöglichen. Ein Segment kann aus einem starren Material, wie beispielsweise Edelstahl, bestehen. Das macht das Arbeitselement widerstandsfähiger. Ein Segment kann auch aus einem kostengünstigen Material, wie Gusseisen oder Stahl bestehen. Damit kann das Arbeitselement kostengünstig hergestellt werden.

Wenn die Segmente aus einem starren Material bestehen, kann die Beweglichkeit der Segmente relativ zueinander mittels einem bestimmten Spiel zwischen Segmenten und Aufnahmeabschnitten des Zentralelements gewährleistet sein.

Ferner kann ein Schwenkmechanismus vorgesehen sein, beispielsweise ein Scharnier, das die Beweglichkeit der Segmente relativ zueinander gewährleistet.

Ein Federelement kann so gestaltet sein, dass es auf verschiedene Segmente verschieden große Kräfte aufbringt. Beispielsweise kann eine Blattfeder oder Tellerfeder so ausgeführt sein, dass sich, betrachtet in Richtung der Drehachse eine Außenkontur mit unterschiedlichen Krümmungsradien ergibt. Beispielsweise kann eine Blattfeder oder Tellerfeder in Radial- und Umfangsrichtung auch unterschiedliche Materialstärken aufweisen.

Der Vorteil davon ist, dass sich die Segmente dann bei gleicher Querkraft unterschiedlich weit auslenken. Somit kann beispielsweise eine Dammform eingestellt werden, die in Bodenbearbeitungsrichtung unterschiedlich breit oder hoch ausgebildet ist oder die in Bodenbearbeitungsrichtung und Querrichtung gewellt ist, bzw. eine Schlangenform aufweist.

Ein Federelement eines erfindungsgemäßen Arbeitselements kann Federsegmente aufweisen, die sich von einem mittleren Bereich des Arbeitselements in der Radialrichtung bis zu dem Ende des Federelements erstrecken.

Dabei kann jedem Segment des Rotationsbauteils ein eigenes Federsegment zugeordnet sein. Somit kann für jedes Segment einzeln eine bestimmte Auslenkung in Richtung der Drehachse eingestellt werden.

Es können auch mehrere Segmente des Rotationsbauteils mit dem gleichen Federsegment gestützt werden. Das reduziert die Anzahl an Komponenten des Arbeitselements und das Arbeitselement kann kostengünstig hergestellt werden.

Ein Federelement eines erfindungssemäßen Arbeitselements kann aus einem Federblech gebildet sein.

Wird ein Federblech für das Federelement verwendet, kann das Federelement mittels beispielsweise Stanzen kostengünstig hergestellt werden. Das Federblech kann plattenförmig sein.

Ein Federelement kann auch aus vorgehärtetem Federstahl bestehen. Das verlängert die Lebensdauer des Arbeitselements.

Zwischen Federsegmenten eines erfindungsgemäßen Arbeitselements können Schlitze vorgesehen sein.

Die Schlitze zwischen den Federsegmenten haben vorzugsweise eine Breite in der Drehrichtung von mindestens 1 mm. Dadurch ist gewährleistet, dass sich sowohl die Federsegmente, als auch die Segmente des Rotationsbauteils relativ zueinander in beide Richtungen bezogen auf die Drehachse bewegen können.

Ferner ist es vorteilhaft, wenn die Schlitze zwischen den Federsegmenten die Schlitze zwischen den Segmenten des Rotationsbauteils überragen. Dadurch ist sichergestellt, dass sich die Segmente relativ zueinander in Richtung der Drehrichtung bewegen können.

Die Schlitze zwischen den Federsegmenten können so gestaltet sein, dass sich für das Federelement, betrachtet in Richtung der Drehachse, eine Kronenform ergibt.

Federsegmente eines erfindungsgemäßen Arbeitselements können in der Radialrichtung schmal zulaufen.

Beispielsweise können Federsegmente dreieckförmig gestaltet sein. Dies verlagert einen Kraftangriffspunkt des Federsegments an dem Segment des Rotationsbauteils radial nach außen und entlastet die Aufnahmeabschnitte des Zentralelements und entsprechende Abschnitte in den Segmenten.

Die Federsegmente können auch tailliert ausgeführt sein. Damit kann eine bestimmte Kraft auf die Führungsfläche verteilt werden, die auf ein Segment des Rotationsbauteils wirkt, wobei die Führungsfläche radial außenliegend und vergrößert gestaltet werden kann. Dies verringert einen Verschleiß an der Führungsfläche.

Die Anzahl der Federsegmente eines erfindungsgemäßen Arbeitselements kann der Anzahl der Segmente entsprechen.

Dadurch ist eine Auslenkung einzelner Segmente des Rotationsbauteils einstellbar. Ferner ist eine Rückstellgeschwindigkeit separat einstellbar, mit der sich ein Segment von einer ausgelenkten Position in seine ursprüngliche Lage bzgl. der Drehachse zurückbewegt.

Ein Segment eines erfindungsgemäßen Arbeitselements kann eine Anschlagfläche aufweisen, die die Bewegung der Segmente relativ zueinander in Richtung der Drehachse beschränkt.

Bei Auslenkung eines Segments trifft die Anschlagfläche auf einen Anschlag. Mit dieser Anschlagfläche wird die Bewegung des Arbeitselements in Richtung der Drehachse beschränkt.

Die Anschlagfläche kann auch in einem Federsegment vorgesehen sein.

Der Anschlag kann beispielsweise ein ringförmiges Metallbauteil sein, das mittig in dem Zentralelement befestigt werden kann. Der Anschlag kann ferner Aufnahmeabschnitte für das Rotationsbauteil und/oder das Federelement aufweisen.

Der Anschlag kann integral mit dem Zentralelement ausgeführt sein.

Der Anschlag kann ferner so gestaltet sein, dass eine Position seiner Anschlagsfläche, auf die die Anschlagsfläche des Segments oder Federelements trifft, in Richtung der Drehachse verschieblich und arretierbar ist. Somit kann eine maximale Auslenkung von Segmenten in Richtung der Drehachse eingestellt werden.

Ein Federelement eines erfindungsgemäßen Arbeitselements kann in dem Zentralelement angebunden sein.

Dazu weist das Zentralelement Aufnahmeabschnitte auf, vergleichbar mit den Aufnahmeabschnitten für das Rotationsbauteil.

Federelement und Rotationsbauteil können auch mittels der gleichen Aufnahmeabschnitte aufgenommen werden. Das reduziert die Anzahl an benötigenden Aufnahmeabschnitten, vereinfacht die Form des Zentralelements und ermöglicht somit eine kostengünstige Herstellung des Arbeitselements.

Federelement und Rotationsbauteil können mittels separater Aufnahmeabschnitte aufgenommen werden, so dass ein Federelement von dem Zentralelement gelöst werden kann, ohne die Arbeitselemente lösen zu müssen. Das erleichtert einen Austausch eines Federelements.

Federsegmente eines erfindungsgemäßen Arbeitselements können separat voneinander vorgesehen sein und mittels dem Zentralelement gekoppelt sein.

In diesem Fall stellt das Zentralelement Aufnahmeabschnitte für jedes Federsegment bereit.

Dies ermöglicht den Austausch einzelner Federsegmente und erhöht somit die Lebensdauer des Arbeitselements.

Ein erfindungsgemäßes Bodenbearbeitungsgerät weist zumindest ein erfindungsgemäßes Arbeitselement, einen Rahmen, der in Bodenbearbeitungsrichtung über den Boden gezogen wird, zumindest ein Stützelement, das an dem Rahmen angebunden ist und das das Arbeitselement stützt. Das Stützelement weist eine Achse auf, die mit der Richtung der Drehachse des Arbeitselements übereinstimmt, und das Stützelement das Arbeitselement in Richtung der Drehachse positioniert. Weiterhin ist zumindest eine Stützrolle vorgesehen, mittels der das Bodenbearbeitungsgerät so an dem Boden abstützbar ist, dass das Arbeitselement in den Boden ragt.

Der Rahmen ermöglicht die Anbindung des Bodenbearbeitungsgerätes an ein Zugfahrzeug, das das Bodenbearbeitungsgerät in Bodenbearbeitungsrichtung über den zu bearbeitenden Boden zieht.

Das Stützelement ist ein Vorsprung in dem Rahmen und dient der Abstützung des Arbeitselements an dem Rahmen. Das Stützelement kann so gestaltet sein, dass es den Lagersitz für einen Innendurchmesser eines Rollenlagers bildet. Die Mittelachse des Lagersitzes bildet dann die Achse, die mit der Drehachse des Arbeitselements übereinstimmt. Das Stützelement kann eine Nut zur Anbringung eines Sicherungsrings aufweisen, um das Rollenlager oder das Arbeitselement in Richtung der Drehachse relativ zu dem Rahmen zu positionieren.

Außerdem kann das Stützelement einen Abstreifabschnitt aufweisen, dessen Kontur der des Arbeitselements entspricht. Der Abstreifabschnitt ist so an dem Stützelement angeordnet, dass er an dem Teil des Rotationsbauteils, der nach dem Eintauchen in den zu bearbeitenden Boden wieder auftaucht, Erdklumpen abstreift, die sich in dem zu bearbeitenden Boden an dem Rotationsbauteil angelagert haben.

Außerdem kann das Stützelement eine Anschlagfläche aufweisen, die die Bewegung von Segmenten des Rotationsbauteils relativ zueinander in Richtung der Drehachse beschränkt.

Eine Stützrolle trägt zumindest einen Teil des Eigengewichts des Arbeitsgeräts. Mittels der Rollenbreite kann eine gewünschte Verdichtung des zu bearbeitenden Bodens eingestellt werden. Die Rolle kann ein keilförmiges Profil in ihrer Drehrichtung aufweisen. Die Rolle kann auch ein teilkreisförmiges Profil in ihrer Drehrichtung aufweisen. Die Rolle kann beispielsweise eine Form eines Tales zwischen zwei Dämmen bestimmen. Eine Packerwalze kann als Rolle verwendet werden.

Der Abstand in der Schwerkraftrichtung der Stützrolle zu dem Rahmen ist veränderbar und arretierbar. Dadurch kann eine Eindringtiefe des Arbeitselements in den zu bearbeitenden Boden eingestellt werden.

Ein Stützelement eines erfindungsgemäßen Bodenbearbeitungsgeräts kann in einem stumpfen Winkel zu der Bodenbearbeitungsrichtung vorstehen.

Die Radialrichtung des montierten Arbeitsgeräts schließt somit, betrachtet aus der Schwerkraftrichtung, mit der Bodenbearbeitungsrichtung einen spitzen Winkel ein. Während der Bodenbearbeitung wird somit auf Bereiche des Arbeitselements, die sich unterhalb der Oberfläche des zu bearbeitenden Bodens befinden, eine Kraft von dem zu bearbeitenden Boden aufgebracht, die als eine Komponente eine Querkraft auf das Arbeitselement hat, also eine Kraft, die senkrecht zu der Drehachse des Arbeitselements auf das Arbeitselement wirkt.

Die Querkraft erzeugt die Relativbewegung der Segmente des Arbeitselements relativ zueinander in Richtung der Drehachse. Damit ist es möglich, dass Erdklumpen, die sich an den Segmenten angelagert haben, segmentweise abgestreift werden. Außerdem wird unterstützt, dass eine Erdbewegung, betrachtet aus der Schwerkraftrichtung, in Richtung des spitzen Winkels stattfindet. Somit können die Arbeitselemente ihre Aufgabe erfüllen.

Vorzugsweise kann der spitze Winkel zwischen Bodenbearbeitungsrichtung und Radialrichtung im Bereich von 10° bis 30° liegen.

Vorzugsweise kann der spitze Winkel so bemessen sein, dass, in Kombination mit einer bestimmten Eindringtiefe des Arbeitselements, die Wölbung eines Segments im Wesentlichen einen 90° Winkel mit dem zu bearbeitenden Boden einschließt, wenn das Segment in den zu bearbeitenden Boden eintaucht.

Ein Stützelement eines Bodenbearbeitungsgeräts kann in einem stumpfen Winkel zu der Schwerkraftrichtung vorstehen.

Dadurch schließt die Radialrichtung des Arbeitselements mit der Schwerkraftrichtung, betrachtet in Bodenbearbeitungsrichtung, einen spitzen Winkel ein. Ähnlich der Funktionsweise eines Pflugs wird dadurch eine Erdreichbewegung entgegen der Schwerkraftrichtung unterstützt.

Der spitze Winkel zwischen Radialrichtung und Schwerkraftrichtung kann vorzugsweise in einem Bereich von 0° bis 20° liegen.

Vorzugsweise kann der spitze Winkel so bemessen sein, dass, in Kombination mit einer bestimmten Eindringtiefe des Arbeitselements und dem spitzen Winkel zwischen der Radialrichtung und der Bodenbearbeitungsrichtung, die Wölbung eines Segments im Wesentlichen einen 90° Winkel mit dem zu bearbeitenden Boden einschließt, wenn das Segment in den zu bearbeitenden Boden eintaucht.

Ein Stützelement eines erfindungsgemäßen Bodenbearbeitungsgeräts kann schwenkbar und arretierbar an dem Rahmen angebunden sein.

Der Rahmen kann beispielsweise Vertikalstreben aufweisen, an deren einem Ende eine Kugelkopfarretierung angebracht ist, mittels der das Stützelement schwenkbar und arretierbar ist. Das hat den Vorteil, dass der Winkel des Stützelements zu der Bodenbearbeitungsrichtung und der Schwerkraftrichtung variabel eingestellt werden kann. Somit kann der Grad der Erdreichbewegung beliebig eingestellt werden und das Bodenbearbeitungsgerät ist vielseitig einsetzbar.

An einem Ende eines Stützelements eines erfindungsgemäßen Bodenbearbeitungsgeräts in Richtung der Drehachse kann ein Gewinde vorgesehen sein und in einem Bereich in Richtung der Drehachse, entfernt von dem Gewinde, kann ein Anschlag an dem Stützelement vorgesehen sein.

Der Anschlag kann dazu dienen, einen Innenring eines Rollenlagers in Richtung der Drehachse zu positionieren. Auf das Gewinde kann eine Mutter geschraubt werden, die die Position des Innenrings sichert.

Ein Stützelement eines erfindungsgemäßen Bodenbearbeitungsgeräts kann so gestaltet sein, dass es das Arbeitselement so stützt, dass der Vorsprung zu dem Stützelement hin orientiert ist oder dass der Vorsprung von dem Stützelement weg orientiert ist.

Sind mehrere Stützelemente mit Arbeitselement in dem Bodenbearbeitungsgerät vorgesehen, die in einer Querrichtung, senkrecht zu der Bodenbearbeitungsrichtung und der Schwerkraftrichtung, versetzt zueinander angeordnet sind, können in der Querrichtung versetzt zueinander angeordnete Arbeitselemente so orientiert sein, dass die Vorsprünge einander zugewandt sind. Mit einer solchen Orientierung kann beispielsweise ein Damm für eine Dammkultur in dem zu bearbeitenden Boden erzeugt werden.

Sind die Vorsprünge von in Querrichtung versetzt zueinander angeordneten Arbeitselementen abgewandt voneinander, können die Arbeitsvorsprünge beispielsweise zur mechanischen Unkrautbekämpfung verwendet werden.

Es können vorzugsweise mehrere Vorsprünge mit Arbeitselement in Bodenbearbeitungsrichtung hintereinander angeordnet sein. Es können vorzugsweise mehrere Paare von einander zu- oder abgewandten Arbeitselementen in Querrichtung nebeneinander angeordnet sein.

### Kurze Beschreibung der Zeichnung

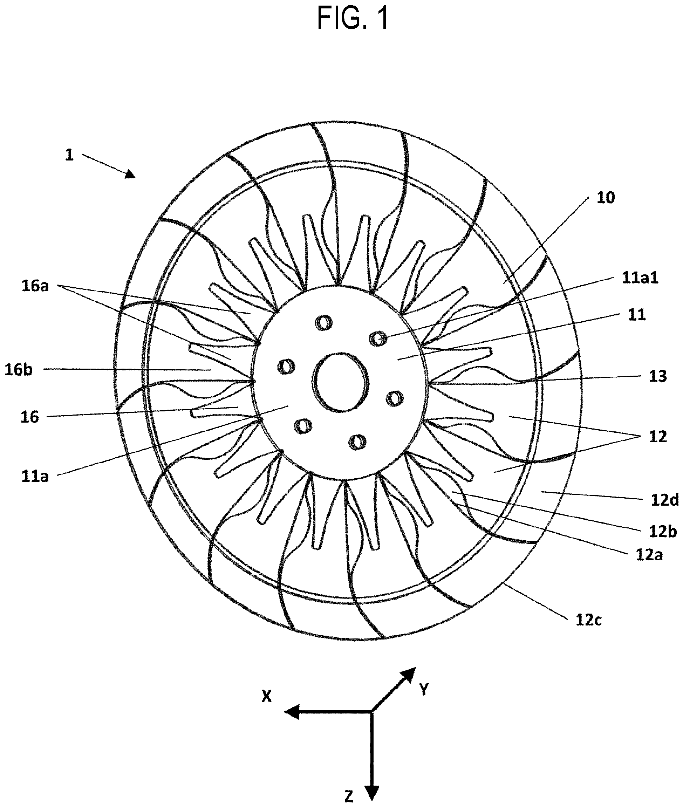

Fig. 1 ist eine perspektivische Ansicht einer Ausführungsform eines Arbeitselements gemäß der vorliegenden Erfindung.

### Beschreibung der Ausführungsform

Fig. 1 zeigt eine Ausführungsform eines Arbeitselements 1 gemäß der vorliegenden Erfindung. In Fig.1 bilden die Radialrichtung X, die Schwerkraftrichtung Z und die Drehachse Y ein Rechtssystem, bzw. ein rechtwinkliges Koordinatensystem.

Das Arbeitselement 1 weist in seiner Mitte ein Zentralelement 11 auf. Das Zentralelement 11 erstreckt sich in der Radialrichtung X plattenförmig. Betrachtet in Richtung der Drehachse Y hat das Zentralelement 11 eine kreisförmige Außenkontur. Der Querschnitt des Zentralelements 11 ist rotationssymmetrisch, also sowohl in der Radialrichtung X, als auch in der Schwerkraftrichtung Y identisch.

In der Mitte des Zentralelements 11 ist eine zylindrische Bohrung, der dem Zentralelement 11 als Lagerungsabschnitt dient. Mittels dem Lagerungsabschnitt kann das Zentralelement 11 drehbar auf einem zylindrischen Vorsprung gelagert werden.

Auf einer Seite in Richtung der Drehachse Y hat das Zentralelement 11 einen flächigen zweiten Aufnahmeabschnitt 11a1 (nicht sichtbar in Fig. 1), an dem ein Federelement 16 anliegt.

Außerdem hat das Zentralelement 11 sechs zylindrische erste Aufnahmeabschnitte 11a1. In die zylindrischen Aufnahmeabschnitte können von einer Seite Schrauben (nicht dargestellt) eingeführt werden, welche von der anderen Seite mittels jeweils einer Mutter (nicht dargestellt) gesichert werden können.

Das Federelement 16 hat Durchgangslöcher, die mit den ersten Auflageabschnitten 11a1 des Zentralelements fluchten.

Das Federelement 16 erstreckt sich in der Radialrichtung X plattenförmig und weist 16 Federsegmente 16a auf, die in der Radialrichtung X schmal zulaufen und eine dreieckige Form haben. Die Bereiche zwischen den Federsegmenten 16a können als Schlitze 16b bezeichnet werden.

Die Seite des Federelements 16 in Richtung der Drehachse Y ist die Führungsfläche 12f. An der Führungsfläche 12f liegt das Rotationsbauteil 10 flächig an dem Federelement 16 an.

Das Rotationsbauteil 10 erstreckt sich in der Radialrichtung X plattenförmig. An dem äußeren Endbereich in der Radialrichtung X weist das Rotationsbauteil 10 einen Vorsprung 12d auf. Der Vorsprung 12d erstreckt sich plattenförmig in die Radialrichtung X und in Richtung der Drehachse Y und geht mittels einer Knickkante in den plattenförmigen Bereich des Rotationsbauteils über, der sich in der Radialrichtung erstreckt. Betrachtet in Richtung der Drehachse Y verläuft die Knickkante kreisförmig und konzentrisch zu dem Lagerungsabschnitt des Zentralelements 11. Der Vorsprung 12d kann auch als Wölbung bezeichnet werden, die in Drehrichtung umlaufend ist.

Am Ende in der Radialrichtung weist die Wölbung eine Schneide 12c auf.

Das Rotationsbauteil 10 weist Segmente 12 auf, die mittels Schlitzen 13 voneinander getrennt sind. Die Segmente können relativ zueinander in Richtung der Drehachse Y schwenken, wobei der radial mittlere Teil, der mittels dem Federelement 16 an dem Aufnahmeabschnitt 11a1 des Zentralelements 11 anliegt, nicht schwenkt. Durch die Schwenkbewegung der Segmente 12 werden Erdklumpen abgestreift, die sich über mehrere (zumindest zwei) Segmente 16 hinweg angelagert haben

Jedes Segment 12 weist eine Eintauchkante 12a auf. Bei der Bodenbearbeitung taucht die Eintauchkante 12a als erster Bestandteil des Segments 12 in den zu bearbeitenden Boden ein. Die Drehrichtung des Arbeitselements ist bezogen auf ein Segment 12 in Richtung der Eintauchkante 12a um die Drehachse Y herum. Betrachtet in Richtung der Drehachse Y ist die Eintauchkante 12a sichelförmig.

Gegenüber der Eintauchkante 12a entgegen der Drehrichtung weist ein Segment 12 eine Aussparung 12b auf. Die Aussparung 12 unterstützt das Abstreifen von angelagerten Erdklumpen, welche sich nach dem Abstreifen frei durch die Aussparung hindurchbewegen können. Dadurch wird verhindert, dass abgestreifte Erdklumpen von Segmenten weggeschleudert werden, die nach einem Auftauchen aus dem zu bearbeitenden Boden mittels dem Federelement 16 zurück in ihre ursprüngliche Lage bezüglich der Drehachse Y gedrückt werden.

Die Aussparung 12b ist bogenförmig gestaltet und in einem mittleren Bereich der Kante in Drehrichtung gegenüber der Eintrittskante positioniert. Die Aussparung 12b verringert die Breite eines Segments 12 um ca. 1/3. Die Aussparung 12b erstreckt sich ca. über 1/3 der Länge eines Segments 12 in Radialrichtung X.

Das Rotationsbauteil 10 hat Durchgangslöcher die mit den die mit den ersten Auflageabschnitten 11a1 der Zentralelements fluchten. Somit können die Schrauben, die in die ersten Auflageabschnitte 11a1 eingeschoben werden, auch durch das Federelement 16 und das Rotationsbauteil 10 eingeschoben werden. Die Schrauben können dann auf der Seite des Rotationsbauteils 10, das in Richtung der Drehachse weist, gesichert werden. Somit sind Zentralelement 10, Federelement 16 und Rotationsbauteil 10 gekoppelt. Der Bereich, in dem die Segmente 12 des Rotationsbauteils schwenkbar sind, ist in Radialrichtung X außerhalb des Bereichs, in dem Zentralelement 10, Federelement 16 und Rotationsbauteil 10 gekoppelt sind.

Das Arbeitselement 1 mittels seinem Lagerungsabschnitt kann so auf einem Stützelement 21 (nicht abgebildet) eines Bodenbearbeitungsgeräts (nicht abgebildet) gelagert werden, dass die Radialrichtung X des Arbeitselements 1 mit der Bodenbearbeitungsrichtung, in der das Bodenbearbeitungsgerät über den zu bearbeitenden Boden gezogen wird, einen spitzen Winkel einschließt. Mit anderen Worten steht das Arbeitsgerät 1 schräg zu der Bodenbearbeitungsrichtung. Bei der Bodenbearbeitung ragt ein in Schwerkraftrichtung Y unterer Teil des Arbeitsgeräts 1 in den zu bearbeitenden Boden. Auf diesen Teil des Arbeitsgeräts 1 übt der zu bearbeitende Boden eine Kraft entgegen der Bodenbearbeitungsrichtung aus. Da das Arbeitsgerät 1 schräg zu der Bodenbearbeitungsrichtung steht, wirkt die Kraft nicht nur in der Radialrichtung X des Arbeitsgeräts 1, sondern auch in Richtung der Drehachse Y. Die Komponente der Kraft, die in Richtung der Drehachse Y wird, wird als Querkraft bezeichnet. Die Komponente der Kraft, die in Radialrichtung X wirkt, wird als Radialkraft bezeichnet. Mit anderen Worten kann die Kraft auf das Arbeitselement 1 in zwei senkrecht zueinanderstehende Komponenten, die Radialkraft und die Querkraft, zerlegt werden.

Die Radialkraft, die in einem Abstand in der Schwerkraftrichtung Z entfernt von der Drehachse Y auf das Arbeitselement 1 wirkt, bewirkt eine Drehbewegung des Arbeitselements 1 um die Drehachse Y.

Die Querkraft, die in Richtung der Drehachse auf Seitenflächen von Segmenten 12, vor allem den Segmenten 12 wirkt, die in den zu bearbeitenden Boden eingetaucht sind, bewirkt eine Auslenkung der Segmente 12 in Richtung der Drehachse Y. Die Auslenkung der Segmente 12 ist eine Schwenkbewegung, die in der Radialrichtung X außen, also im Bereich der Wölbung 12d, groß ist, und im Bereich des Zentralelements 11 minimal ist. Dabei wird das Federelement 16 gespannt.

In der vorliegenden Ausführungsform ist die Wölbung 12d in Richtung der Drehachse Y vorspringend. Das Arbeitselement 1 ist so auf dem Stützelement gelagert, dass die Kraft in Bodenbearbeitungsrichtung auf die Seite des Arbeitselements 1 trifft, in deren Richtung auch die Wölbung 12d vorspringt. Folglich wirkt in dem vorliegenden Ausführungsbeispiel die Querkraft aus der Richtung der Drehachse Y auf die Segmente 12 entgegen der Richtung der Drehachse Y. Dementsprechend werden die Segmente 12d, die in den zu bearbeitenden Boden tauchen, entgegen der Richtung der Drehachse Y ausgelenkt.

Wenn die Segmente 12 wieder aus dem zu bearbeitenden Boden auftaucht, ist keine Querkraft mehr an diesen Segmenten 12 anliegend. Deswegen werden diese Segmente 12 mittels der Spannkraft des Federelements 16 wieder zu ihrer ursprünglichen Lage bezüglich dem Zentralelement 11 zurückbewegt.

Somit Findet in der vorliegenden Ausführungsform eine starke Erdreichbewegung entgegen der Schwerkraftrichtung Z und in Richtung der Drehachse Y statt. Die vorliegende Ausführungsform wird somit dazu verwendet, einen Damm für beispielsweise eine Dammkultur aus dem zu bearbeitenden Boden zu erzeugen.

Alternativ, kann das Arbeitselement 1 um 180° gedreht um die Schwerkraftrichtung Y auf demselben Stützelement 21, wie zuvor, gelagert werden. In diesem Fall springt die Wölbung 12d entgegen der Richtung der Drehachse Y vor. Segmente 12, die in den zu bearbeitenden Boden ragen, werden, wie zuvor, entgegen der Drehrichtung Y ausgelenkt. Wie zuvor findet eine Erdreichbewegung entgegen der Schwerkraftrichtung Z und in Richtung der Drehachse Y statt. Allerdings ist die Erdreichbewegung in diesem Fall in Richtung der Drehachse Y wesentlich geringer, das die in entgegengesetzte Richtung vorspringende Wölbung 12d die Erdreichbewegung weniger unterstützt. Das so ausgerichtete Arbeitselement 1, wird zur mechanischen Unkrautvernichtung verwendet.

Ein Arbeitselement 1 für ein Bodenbearbeitungsgerät weist ein Zentralelement 11, das in einem mittleren Bereich des Arbeitselements 1 angeordnet ist, und ein Rotationsbauteil 10 auf, das mittels dem Zentralelement 11 um eine Drehachse Y in eine Drehrichtung drehbar ist und sich von dem Zentralelement 11 in einer Radialrichtung X erstreckt, die einen stumpfen Winkel mit der Drehachse Y einschließt. Dabei weist das das Rotationsbauteil 10 Segmente 12 auf, die sich in der Radialrichtung X bis zu dem Ende des Rotationsbauteils 10 erstrecken, die an einem Ende in der Radialrichtung X entfernt von dem Zentralelement 11 eine Schneide 12c aufweisen, die an einer in Drehrichtung vorderen Seite eine Eintauchkante 12a aufweisen und die einen in Drehrichtung umlaufenden und in Richtung der Drehachse Y vorstehenden Vorsprung 12d aufweisen. Dabei ist das Arbeitselement 1 so gestaltet, dass die Segmente 12 relativ zueinander in Richtung der Drehachse Y beweglich sind.

## Patentansprüche

1. Arbeitselement (1) für ein Bodenbearbeitungsgerät, wobei das Arbeitselement (1) aufweist:
ein Zentralelement (11), das in einem mittleren Bereich des Arbeitselements (1) angeordnet ist, und
ein Rotationsbauteil (10), das mittels dem Zentralelement (11) um eine Drehachse (Y) in eine Drehrichtung drehbar ist und sich von dem Zentralelement (11) in einer Radialrichtung (X) erstreckt, die senkrecht zu der Drehachse (Y) ist oder einen stumpfen Winkel mit der Drehachse (Y) einschließt, wobei
das Rotationsbauteil (10) Segmente (12) aufweist, die sich in der Radialrichtung (X) bis zu dem Ende des Rotationsbauteils (10) erstrecken, die an einem Ende in der Radialrichtung (X) entfernt von dem Zentralelement (11) eine Schneide (12c) aufweisen, die an einer in Drehrichtung vorderen Seite eine Eintauchkante (12a) aufweisen und die einen in Drehrichtung umlaufenden und in Richtung der Drehachse (Y) vorstehenden Vorsprung (12d) aufweisen, und
das Arbeitselement (1) so gestaltet ist, dass die Segmente (12) relativ zueinander in der Richtung der Drehachse (Y) beweglich sind,
**dadurch gekennzeichnet, dass**
der Vorsprung (12d) an einem Ende in Radialrichtung (X) der Segmente (12) entfernt von dem Zentralelement (11) angeordnet ist.

2. Arbeitselement (1) nach Anspruch 1, wobei der Vorsprung (12d) mittels einem Knick gebildet wird, von dem aus sich das Rotationsbauteil (10) zusätzlich zu der Radialrichtung (X) in Richtung der Drehachse (Y) erstreckt.

3. Arbeitselement (1) nach Anspruch 1 bis 2, wobei ein Segment (12) zumindest eine Aussparung (12b) hat.

4. Arbeitselement (1) nach Anspruch 3, wobei eine Aussparung (12b) in der Radialrichtung (X) in einem mittleren Bereich des Segments (12) und auf einer Außenseite des Segments (12) gegenüber der Eintauchkante (12a) positioniert ist.

5. Arbeitselement (1) nach Anspruch 1 bis 4, wobei zwischen den Segmenten (12) in Radialrichtung (X) Schlitze (13) vorgesehen sind.

6. Arbeitselement (1) nach Anspruch 1 bis 5, wobei die Segmente (12) aus vorgehärtetem Federstahl hergestellt sind.

7. Arbeitselement (1) nach Anspruch 1 bis 6 wobei die Segmente (12) im Wesentlichen plattenförmig in der Radialrichtung (X) sind.

8. Arbeitselement (1) nach Anspruch 1 bis 7, wobei das Zentralelement (11) ein separates Bauteil ist.

9. Arbeitselement (1) nach Anspruch 8, wobei das Zentralelement (11) zumindest einen Aufnahmeabschnitt (11a) aufweist, um das Rotationsbauteil (10) an dem Zentralelement (11) in Radialrichtung (X) und Achsrichtung (Y) zu stützen.

10. Arbeitselement (1) nach Anspruch 8 bis 9, wobei die Segmente (12) separat voneinander sind und mittels dem Zentralelement (11) gekoppelt sind.

11. Arbeitselement (1) nach Anspruch 1 bis 10, wobei die Segmente (12) mittels zumindest einem Federelement (16) geführt werden, das auf die Segmente (12) an zumindest einer Führungsfläche (12f) eine Federkraft zum Großteil in Achsrichtung (Y) aufbringt.

12. Arbeitselement (1) nach Anspruch 11, wobei ein Federelement (16) Federsegmente (16a) aufweist, die sich von einem mittleren Bereich des Arbeitselements (1) in der Radialrichtung (X) bis zu dem Ende des Federelements (16) erstrecken.

13. Arbeitselement (1) nach Anspruch 11 bis 12, wobei ein Federelement (16) aus einem Federblech gebildet wird.

14. Arbeitselement (1) nach Anspruch 11 bis 13, wobei zwischen den Federsegmenten (16a) Schlitze (16b) vorgesehen sind.

15. Arbeitselement (1) nach Anspruch 11 bis 14, wobei die Federsegmente in der Radialrichtung (X) schmal zulaufen.

16. Arbeitselement (1) nach Anspruch 11 bis 15, wobei die Anzahl der Federsegmente (16a) der Anzahl der Segmente (12) entspricht.

17. Arbeitselement (1) nach Anspruch 1 bis 16, wobei ein Segment (12) eine Anschlagfläche (12e) aufweist, die die Bewegung der Segmente (12) relativ zueinander in Richtung der Drehachse (Y) beschränkt.

18. Arbeitselement (1) nach Anspruch 8 bis 16, wobei das Federelement (16) in dem Zentralelement (11) angebunden ist.

19. Arbeitselement (1) nach Anspruch 18, wobei die Federsegmente (16a) separat voneinander vorgesehen sind und mittels dem Zentralelement (11) gekoppelt sind.

20. Bodenbearbeitungsgerät mit:
zumindest einem Arbeitselement (1)
einem Rahmen (2), der in Bodenbearbeitungsrichtung (X1) über den Boden gezogen wird,
zumindest einem Stützelement, das an dem Rahmen (2) angebunden ist und das das Arbeitselement (1) stützt, wobei das Stützelement eine Achse aufweist, die mit der Achsrichtung der Drehachse (Y) des Arbeitselements (1) übereinstimmt, und das Stützelement das Arbeitselement (1) in Richtung der Drehachse (Y) positioniert, und
zumindest einer Stützrolle (24), mittels der das Bodenbearbeitungsgerät so an dem Boden abstützbar ist, dass das Arbeitselement (1) in den Boden ragt.

21. Bodenbearbeitungsgerät nach Anspruch 20, wobei das Stützelement in einem stumpfen Winkel zu der Bodenbearbeitungsrichtung vorsteht.

22. Bodenbearbeitungsgerät nach Anspruch 20 bis 21, wobei das Stützelement in einem stumpfen Winkel zu einer Schwerkraftrichtung (Z) vorsteht.

23. Bodenbearbeitungsgerät nach Anspruch 20 bis 22, wobei ein Stützelement schwenkbar und arretierbar an dem Rahmen (2) angebunden ist.

24. Bodenbearbeitungsgerät nach Anspruch 20 bis 23, wobei an einem Ende des Stützelements in Richtung der Drehachse (Y) ein Gewinde vorgesehen ist und in einem Bereich in Richtung der Drehachse (Y), entfernt von dem Gewinde, ein Anschlag an dem Stützelement vorgesehen ist.

25. Bodenbearbeitungsgerät nach Anspruch 20 bis 24, wobei das Stützelement so gestaltet ist, dass es das Arbeitselement (1) so stützt, dass der Vorsprung (12d) zu dem Stützelement hin orientiert ist oder dass der Vorsprung (12d) von dem Stützelement weg orientiert ist.

## Claims

1. A working element (1) for a soil cultivation device, wherein the working element (1) comprises:
a central element (11) which is arranged in a central region of the working element (1), and
a rotating component (10) which is rotatable about a rotational axis (Y) in a rotational direction by means of the central element (11) and extends from the central element (11) in a radial direction (X) which is perpendicular to the rotational axis (Y) or includes an obtuse angle with the rotational axis (Y), wherein
the rotating component (10) has segments (12) which extend in the radial direction (X) to the end of the rotating component (10), which have a cutting edge (12c) at one end in the radial direction (X) distant from the central element (11), which have a plunging edge (12a) on a front side in the rotational direction and which have a projection (12d) circumferential in the rotational direction and projecting in the direction of the rotational axis (Y), and
the working element (1) is configured such that the segments (12) are movable relative to one another in the direction of the rotational axis (Y),
**characterized in that**
the projection (12d) is arranged at one end in the radial direction (X) of the segments (12) distant from the central element (11).

2. The working element (1) according to claim 1, wherein the projection (12d) is formed by means of a kink, from which the rotating component (10) extends in addition to the radial direction (X) in the direction of the rotional axis (Y).

3. The working element (1) according to claims 1 to 2, wherein a segment (12) has at least one recess (12b).

4. The working element (1) according to claim 3, wherein a recess (12b) is positioned in the radial direction (X) in a central region of the segment (12) and on an outer side of the segment (12) opposite the plunging edge (12a).

5. The working element (1) according to claims 1 to 4, wherein slots (13) are provided between the segments (12) in the radial direction (X).

6. The working element (1) according to claims 1 to 5, wherein the segments (12) are made of pre-hardened spring steel.

7. The working element (1) according to claims 1 to 6 wherein the segments (12) are substantially plate-shaped in the radial direction (X).

8. The working element (1) according to claims 1 to 7, wherein the central element (11) is a separate component.

9. The working element (1) according to claim 8, wherein the central element (11) has at least one receiving section (11a) for supporting the rotating component (10) on the central element (11) in the radial direction (X) and axial direction (Y).

10. The working element (1) according to claims 8 to 9, wherein the segments (12) are separate from each other and are coupled by means of the central element (11).

11. The working element (1) according to claims 1 to 10, wherein the segments (12) are guided by means of at least one spring element (16) which applies a spring force to the segments (12) on at least one guide surface (12f) mostly in the axial direction (Y).

12. The working element (1) according to claim 11, wherein a spring element (16) has spring segments (16a) which extend from a central region of the working element (1) in the radial direction (X) to the end of the spring element (16).

13. The working element (1) according to claims 11 to 12, wherein a spring element (16) is formed from a spring plate.

14. The working element (1) according to claims 11 to 13, wherein slots (16b) are provided between the spring segments (16a).

15. The working element (1) according to claims 11 to 14, wherein the spring segments taper narrowly in the radial direction (X).

16. The working element (1) according to claims 11 to 15, wherein the number of spring segments (16a) corresponds to the number of segments (12).

17. The working element (1) according to claims 1 to 16, wherein a segment (12) has a stop surface (12e) which restricts the movement of the segments (12) relative to one another in the direction of the rotational axis (Y).

18. The working element (1) according to claims 8 to 16, wherein the spring element (16) is connected in the central element (11).

19. The working element (1) according to claim 18, wherein the spring segments (16a) are provided separately from each other and are coupled by means of the central element (11).

20. A soil cultivation device comprising:
at least one working element (1)
a frame (2) which is pulled over the soil in the soil cultivation direction (X1),
at least one support element which is attached to the frame (2) and which supports the working element (1), wherein the support element has an axis which coincides with the axial direction of the rotational axis (Y) of the working element (1), and the support element positions the working element (1) in the direction of the rotational axis (Y), and
at least one support roller (24) by means of which the soil cultivation device can be supported on the soil in such a way that the working element (1) projects into the soil.

21. The soil cultivation device according to claim 20, wherein the support element projects at an obtuse angle to the soil cultivation direction.

22. The soil cultivation device according to claims 20 to 21, wherein the support element projects at an obtuse angle to a direction of gravity (Z).

23. The soil cultivation device according to claims 20 to 22, wherein a support element is attached to the frame (2) such that it can be pivoted and locked.

24. The soil cultivation device according to claims 20 to 23, wherein a thread is provided at one end of the support element in the direction of the rotational axis (Y) and a stop is provided on the support element in a region in the direction of the rotational axis (Y), distant from the thread.

25. The soil cultivation device according to claims 20 to 24, wherein the support element is configured to support the working element (1) such that the projection (12d) is oriented towards the support element or such that the projection (12d) is oriented away from the support element.

## Revendications

1. Élément de travail (1) pour un appareil de traitement du sol, l'élément de travail (1) comprenant :
un élément central (11) disposé dans une zone centrale de l'élément de travail (1), et
un composant rotatif (10) qui peut être tourné autour d'un axe de rotation (Y) dans un sens de rotation au moyen de l'élément central (11) et qui s'étend depuis l'élément central (11) dans une direction radiale (X) qui est perpendiculaire à l'axe de rotation (Y) ou forme un angle obtus avec l'axe de rotation (Y), dans lequel
le composant rotatif (10) présente des segments (12) qui s'étendent dans la direction radiale (X) jusqu'à l'extrémité du composant rotatif (10), qui présentent un tranchant (12c) à une extrémité éloignée de l'élément central (11) dans la direction radiale (X), qui présentent un bord de plongée (12a) sur un côté avant dans le sens de rotation et qui présentent une saillie (12d) périphérique dans le sens de rotation et faisant saillie dans la direction de l'axe de rotation (Y), et
l'élément de travail (1) est conçu de telle sorte que les segments (12) sont mobiles les uns par rapport aux autres dans la direction de l'axe de rotation (Y),
**caractérisé en ce que**
la saillie (12d) est disposée à une extrémité éloignée de l'élément central (11) dans la direction radiale (X) des segments (12).

2. Élément de travail (1) selon la revendication 1, dans lequel la saillie (12d) est formée au moyen d'un coude à partir duquel l'élément de rotation (10) s'étend dans la direction de l'axe de rotation (Y) en plus de la direction radiale (X).

3. Élément de travail (1) selon les revendications 1 à 2, dans lequel un segment (12) présente au moins un évidement (12b).

4. Élément de travail (1) selon la revendication 3, dans lequel un évidement (12b) est positionné dans la direction radiale (X) dans une zone centrale du segment (12) et sur un côté extérieur du segment (12) opposé au bord de plongée (12a).

5. Élément de travail (1) selon les revendications 1 à 4, dans lequel des fentes (13) sont prévues entre les segments (12) dans la direction radiale (X).

6. Élément de travail (1) selon les revendications 1 à 5, dans lequel les segments (12) sont fabriqués en acier à ressort pré-durci.

7. Élément de travail (1) selon les revendications 1 à 6, dans lequel les segments (12) sont sensiblement en forme de plaque dans la direction radiale (X).

8. Élément de travail (1) selon les revendications 1 à 7, dans lequel l'élément central (11) est un composant séparé.

9. Élément de travail (1) selon la revendication 8, dans lequel l'élément central (11) présente au moins une partie de réception (11a) pour supporter l'élément de rotation (10) sur l'élément central (11) dans la direction radiale (X) et la direction axiale (Y).

10. Élément de travail (1) selon les revendications 8 à 9, dans lequel les segments (12) sont séparés les uns des autres et sont couplés au moyen de l'élément central (11).

11. Élément de travail (1) selon les revendications 1 à 10, dans lequel les segments (12) sont guidés au moyen d'au moins un élément de ressort (16) qui applique sur les segments (12), sur au moins une surface de guidage (12f), une force élastique en grande partie dans la direction axiale (Y).

12. Élément de travail (1) selon la revendication 11, dans lequel un élément de ressort (16) comprend des segments de ressort (16a) qui s'étendent depuis une zone centrale de l'élément de travail (1) dans la direction radiale (X) jusqu'à l'extrémité de l'élément de ressort (16).

13. Élément de travail (1) selon les revendications 11 à 12, dans lequel un élément de ressort (16) est formé d'une tôle à ressort.

14. Élément de travail (1) selon les revendications 11 à 13, dans lequel des fentes (16b) sont prévues entre les segments de ressort (16a).

15. Élément de travail (1) selon les revendications 11 à 14, dans lequel les segments de ressort s'effilent dans la direction radiale (X).

16. Élément de travail (1) selon les revendications 11 à 15, dans lequel le nombre de segments de ressort (16a) correspond au nombre de segments (12).

17. Élément de travail (1) selon les revendications 1 à 16, dans lequel un segment (12) présente une surface de butée (12e) qui limite le mouvement des segments (12) les uns par rapport aux autres dans la direction de l'axe de rotation (Y).

18. Élément de travail (1) selon les revendications 8 à 16, dans lequel l'élément de ressort (16) est relié dans l'élément central (11).

19. Élément de travail (1) selon la revendication 18, dans lequel les segments de ressort (16a) sont prévus séparément les uns des autres et sont couplés au moyen de l'élément central (11).

20. Appareil de traitement du sol comprenant :
au moins un élément de travail (1),
un cadre (2) qui est tiré sur le sol dans le sens du traitement du sol (XI),
au moins un élément de support qui est relié au cadre (2) et qui supporte l'élément de travail (1), l'élément de support ayant un axe qui coïncide avec la direction axiale de l'axe de rotation (Y) de l'élément de travail (1), et l'élément de support positionnant l'élément de travail (1) dans la direction de l'axe de rotation (Y), et
au moins un rouleau de support (24) au moyen duquel l'appareil de traitement du sol peut être appuyé sur le sol de telle sorte que l'élément de travail (1) fasse saillie dans le sol.

21. Appareil de traitement du sol selon la revendication 20, dans lequel l'élément de support fait saillie selon un angle obtus par rapport à la direction de traitement du sol.

22. Appareil de traitement du sol selon les revendications 20 à 21, dans lequel l'élément de support fait saillie selon un angle obtus par rapport à une direction de gravité (Z).

23. Appareil de traitement du sol selon les revendications 20 à 22, dans lequel un élément de support est relié au cadre (2) de manière pivotante et verrouillable.

24. Appareil de traitement du sol selon les revendications 20 à 23, dans lequel un filetage est prévu à une extrémité de l'élément de support dans la direction de l'axe de rotation (Y) et une butée est prévue sur l'élément de support dans une zone dans la direction de l'axe de rotation (Y), éloignée du filetage.

25. Appareil de traitement du sol selon les revendications 20 à 24, dans lequel l'élément de support est configuré pour supporter l'élément de travail (1) de telle sorte que la saillie (12d) est orientée vers l'élément de support ou que la saillie (12d) est orientée à l'opposé de l'élément de support.
